Europäisches Patentamt

European Patent Office

Office européen des brevets

(19)

(11) **EP 0 401 200 B2**

(12) **NEUE EUROPÄISCHE PATENTSCHRIFT**

(45) Veröffentlichungstag und Bekanntmachung des Hinweises auf die Entscheidung über den Einspruch:
**09.12.1998 Patentblatt 1998/50**

(45) Hinweis auf die Patenterteilung:
**19.01.1994 Patentblatt 1994/03**

(21) Anmeldenummer: **90890165.5**

(22) Anmeldetag: **28.05.1990**

(51) Int Cl.⁶: **C08F 220/12**, C08F 246/00, C04B 26/06

(54) **Copolymerisat sowie dessen Verwendung**

Copolymer and its use

Copolymère et son usage

(84) Benannte Vertragsstaaten:
**BE CH DE FR GB IT LI LU NL**

(30) Priorität: **31.05.1989 AT 1326/89**
 **31.05.1989 AT 1324/89**

(43) Veröffentlichungstag der Anmeldung:
**05.12.1990 Patentblatt 1990/49**

(60) Teilanmeldung: **92119540.0 / 0 529 695**

(73) Patentinhaber: **bcd Rohstoffe für Bauchemie HandelsgmbH**
**A-3400 Klosterneuburg (AT)**

(72) Erfinder:
 • **Axmann, Heinz, Dr.**
 **A-3400 Klosterneuburg (AT)**
 • **Legradic, Vladimir, Dipl. Ing. Dr.**
 **A-3004 Ried (AT)**

(74) Vertreter: **Puchberger, Peter, Dipl.-Ing. et al Patentanwälte**
**Dipl.-Ing. Georg Puchberger**
**Dipl.-Ing. Rolf Puchberger**
**Dipl.-Ing. Peter Puchberger**
**Singerstrasse 13**
**1011 Wien (AT)**

(56) Entgegenhaltungen:
 EP-A- 147 759          EP-A- 206 157
 EP-A- 239 213          EP-A- 0 070 498
 EP-B- 208 426          AT-A- 359 904
 DE-A- 1 569 903        DE-A- 1 720 355
 DE-A- 2 213 756        DE-A- 2 357 068
 DE-A- 2 440 165        DE-A- 2 446 703
 DE-A- 2 812 038        GB-A- 962 548
 GB-A- 1 088 296        JP-A-51 115 543
 JP-A-51 132 233        JP-A-58 180 563
 JP-A-59 093 775        JP-A-59 210 984
 JP-A-60 009 970        JP-A-60 032 869
 JP-A-60 233 179        JP-A-61 019 677
 JP-A-63 069 739        US-A- 3 007 887
 US-A- 3 344 103        US-A- 3 616 166
 US-A- 4 289 675

 • **K.-H. Illers, Kolloid-Zeitschrift und Zeitschrift für Polymere, Bd. 190, Helft 1, 1963, S.16**
 • **G. Kanig, Kolloid-Zeitschrift und Zeitschrift für Polymere, Bd. 190, 1963, S. 1**
 • **Ullmanns's Encyclopedia of Industrial Chemistry. Vol. A21, 1992, S. 169**
 • **Survey of Crosslinking Emulsions, Vol. 50, Nr. 641, 1978, S. 41-55**
 • **Chemiker Kalender, Springer Verlag, 1956, S. 202**
 • **Lehrbuch der organischen Chemie, Hirzel Verlag, Stuttgart, 1976, S. 112**
 • **Chemical Abstracts 106, Ref. nr. 86352, 1987**
 • **Chemical Abstracts 105, Ref. nr. 98866, 1985**

Bemerkungen:
 Teilanmeldung 92119540.0 eingereicht am 28/05/90.

EP 0 401 200 B2

**Beschreibung**

Die Erfindung betrifft ein Verfahren zur Herstellung von Copolymerisaten durch radikalische Polymerisation mehrer olefinisch ungesättigter Monomeren in wäßriger Emulsion in Gegenwart von Emulgatoren, wobei mindestens eines der Monomeren eine Löslichkeit von >5 Gew.% in Wasser unter den Reaktionsbedingungen aufweist.

Copolymerisate, welche unter Mitverwendung wasserlöslicher Monomere hergestellt werden, sind für verschiedene Zwecke bekannt:

So beschreibt das französische Patent Nr. 8027085 eine polymere Dispersion unter Mitverwendung von N-Methylolacrylamid und Acrylnitril neben Styrol und Butadien als Hauptkomponenten. Die verschiedenen Dispersionen haben einen Trockensubstanzgehalt von ca. 46% und werden als Zusatz zu zementären Mörteln verwendet.

Das französische Patent Nr. 0072735 hat zum Inhalt ein Zweistufenverfahren zur Polymerisation von Vinylacetat, N-Methylolacrylamid und Acrylamid, wobei in der ersten Stufe ein Schutzkolloid aus o.g. Monomeren und Polyethylenglykol durch eine Lösungspolymerisation hergestellt wird.

In einer nachfolgenden Stufe werden in einer Emulsionspolymerisation unter Verwendung von Vinylazetat und anderen Comonomeren Polymerdispersionen hergestellt, die 50 - 55 % Trockensubstanz beinhalten und als Rohstoffe für die Herstellung von Farben, Klebstoffen, Papier, Textil und Zusatzmittel für Mörtel Verwendung finden. Das kanadische Patent Nr. 1143385 beschreibt einen Styrol/Butadien-Latex, der 0,5 - 5 %, berechnet auf das Polymer, N-Methylolacrylamid oder je 0,5 - 5 % N-Methylolacrylamid und Acrylnitril, berechnet auf das Polymer, beinhaltet. Diese Zusammensetzung wird als Zusatz zu zementären Mörteln verwendet.

Ein bevorzugtes Anwendungsgebiet für derartige Kompositionen ist die Verwendung als Zusätze für hydraulisch abbindende Bindemittel. Die Probleme bei der Herstellung solcner Copolymerisate bestehen

a) in der Herstellung solcher Polymerdispersionen mit einer hohen Trockensubstanz, die Zementmischungen mit 55 und mehr Gew.-% Kunststoffanteil, bezogen auf Zement, ermöglichen;

b) in der gleichmäßigen Zudosierung des stark zu Kondensationsreaktionen neigenden Monomers N-Methylolacrylamid;

c) in der Herstellung von Dispersionen, die in der Mischung mit hydraulischen Bindemitteln eine anwendungsgerechte Konsistenz ergeben.

Es wurde überraschenderweise gefunden, daß man diese Probleme vermeiden kann, wenn man vor der eigentlichen Emulsionspolymerisation in einem eigenen Schritt nur die wasserlöslichen Comonomere gemeinsam mit den für die anschließende Emulsionspolymerisation benötigten Emulgatoren in einer Lösungspolymerisation vorpolymerisiert und unmittelbar darauf die Emulsionspolymerisation durchführt.

Das erfindungsgemäße Verfahren ist dadurch gekennzeichnet, daß in einem ersten Schritt das oder die wasserlöslichen Monomeren (c, d, e) in Gegenwart der Emulgatoren bis zu einem Umsatz von mindestenes 15%, vorzugsweise 20 - 30%, polymerisiert und danach das oder die weiteren Monomeren (a, b, f) dem Reaktionsgemisch, gegebenenfalls stufenweise, zugesetzt werden, wobei folgende Monomeren eingesetzt werden:

a) 50 - 97 Gew.%, bezogen auf (a) + (b), mindestens eines nicht wasserlöslichen Monomeren, dessen Homopolymer eine Tg < -50°C aufweist;

b) 3 - 50 Gew.%, bezogen auf (a) + (b), mindestens eines mit (a) copolymerisierbaren, nicht wasserlöslichen Monomeren, dessen Homopolymer eine Tg > +50°C aufweist;

c) 0,1 - 1,0 Gew.%, bezogen auf (a) + (b), einer ungesättigten Carbonsäure;

d) 1,0 - 5 Gew.%, bezogen auf (a) + (b), eines N-Methylolamides einer ungesättigten Carbonsäure;

e) 0 - 3 Gew.%, vorzugsweise 1 - 3 Gew.%, bezogen auf (a) + (b), eines mit (c) und (d) copolymerisierbaren weiteren wasserlöslichen Monomeren;

f) 0 - 100 Gew.%, bevorzugt 0 - 50 Gew.%, insbesondere 0 - 20 Gew.%, bezogen auf (a) + (b), an weiteren nicht wasserlöslichen Comonomeren.

Weitere vorteilhafte Merkmale des Verfahrens sind den Unteransprüchen zu entnehmen.

Es ist bereits seit langem bekannt, daß Kunststoffzusätze zu hydraulisch abbindenden Bindemitteln Verbesserungen der mechanischen Eigenschaften, wie Biegezugfestigkeit, Bruchfestigkeit, Elastizitätsmodul, Schlagzähigkeit usw. bewirken.

Zement/Polymerdispersionsmischungen sind bereits in mehreren Patenten und Schriften beschrieben worden: DE-A 1182 128, DE-A 1646 524, DE-C 1495 748. Firmenschrift von Roehm and Haas Comp., Phil. 3.1.1969, AT-A 359904 (Perlmooser), "Encyclopedia of Polymer Science and Technology", John Wiley & Sons Inc.. New York 1965, Vol. 2, S 727, "Encyclopedia of Polymer Science and Technology", John Wiley & Sons Inc., New York 1957, Vol. 6, S 397 - 402, US-Patent 2 662 064, Canadian Patent Nr. 1 143 385, Französisches Patent 8 027 085, US-Patent 4 039 345, US-PAtent 4 075 528.

Die beiden zum Stand der Technik gehörenden Druckschriften EP-A1 70 498 (HOECHST) und US-PS-3 007 887 (Goodrich) betreffen grundsätzlich Lacke und somit eine völlig andere Anwendung als die Copolymerisate der vorliegenden Erfindung. Insbesondere eignen sich die in den Vorhalten beschriebenen Polymere nicht für die Kombination mit Zement.

Der Vorhalt Hoechst beschreibt Kunststoffdispersionen mit einem niedrigen Feststoffgehalt von 35 bis 37 %. Ein derartiger niedriger Feststoffgehalt ergäbe einen zu hohen Wassergehalt des Gemisches mit Zement und Schwindrisse würden die Folge sein. Gemäß Seite 10 Absatz 4 des Vorhaltes weisen die bekannten Copolymerisate Glasübergangstemperaturen im Bereich von 0 bis 60°C auf. Demgegenüber liegen die Glasübergangstemperaturen gemäß Erfindung wesentlich tiefer, nämlich unterhalb -50°C.

Der Vorhalt Goodrich beschreibt als Endprodukt ein Polymerisat in Form eines wasserlöslichen Lösungspalymerisates. Demgegenüber liegt aber beim erfindungsgemäßen Polymerisat ein nicht wasserlösliches Endprodukt, eine Suspension von Feststoff in Wasser, vor.

Der Nachteil dieser bekannten Produkte liegt darin, daß sie mehrfach auf Basis von Neopren- oder SBR-Latices aufgebaut sind und somit nicht für alle Zwecke genügend witterungsbeständig sind. Der Kunststoffanteil, bezogen auf Zement, beträgt nach dem oben erwähnten Stand der Technik 3 bis max. 35 % Kunststoff, bezogen auf hydraulische Bindemittel, wobei zwecks besserer Verarbeitung noch Wasser zugesetzt wird. Dies verschlechtert aber auf Grund des höheren W/Z Faktors die mechanischen Eigenschaften des Endproduktes.

Aufgabe der vorliegenden Erfindung war es, ein Herstellungsverfahren für eine Polymerdispersion zu konzipieren, die in der Lage ist, Kunststoff/Zementmischungen mit bis zu 60 % Kunststoff bezogen, auf anorganische Bindemittel, zu ermöglichen, und dann noch zusätzlich bis zu 200 % (berechnet auf das anorganische Bindemittel) andere Zuschlagsstoffe aufzunehmen, im Stand ist. Das in der Polymerdispersion vorhandene Wasser reicht dabei aus, eine gut verarbeitbare Masse zu erhalten. Auf diese Weise bleibt der erzielte W/Z-Faktor niedrig, was bekanntlich eine maximale Festigkeit der Zementmatrix gewährleistet.

Diese Zweikomponentensysteme, bei denen Zement mit dem Wasseranteil der Polymerdispersion hydratisiert wird, zeigen je nach der Glasübergangstemperatur (Tg) des Polymers, insbesondere bei Tg von -40°C bis 0°C, mehr oder weniger entropieelastische Eigenschaften, sodaß man beinahe von "Gummibeton" sprechen kann (bei entspr. niedriger Tg).

Die erwähnten Zweikomponentensysteme mit hoher Dehnfähigkeit finden Verwendung als wasserdichte und witterungsbeständige Dichtungsmassen (Dachbeschichtungen). Eine weitere wichtige Verwendung solcher Zweikomponentensysteme ist der Korrosionsschutz für Stahlbeton. Es hat sich gezeigt, daß diese Stoffe gegen die korrosiven Industriegase Kohlendioxid und Schwefeldioxid undurchlässig sind. Ausschlaggebend dafür ist (wahrscheinlich) der hohe Kunststoffgehalt, bezogen auf das hydraulische Bindemittel, dieser Systeme. Gleichzeitig weisen diese Massen eine ausgezeichnete Wasserdampfdurchlässigkeit auf, eine Eigenschaft, die im Baugewerbe von besonderer Bedeutung ist.

Die konzentrierten Polymerdispersionen sollen transparente, lichtechte, verseifungs- und witterungsbeständige Filme liefern und hochkonzentrierte wasserarme Kunststoff/Zement-Mischungen bilden die im ausgehärteten Zustand eine hohe Dehnfähigkeit bis zu 300 % aufweisen. Es wurde gefunden, daß gemäß Erfindung erhaltene Polymerdispersionen die oben erwähnten Eigenschaften aufweisen. Vorteilhaft ist dabei die Mitverwendung einer ungesättigten Carbonsäure, z.B. (Meth)acrylsäure sowie eines N-Methylolamides einer ungesättigten Carbonsäure, z.B., N-Methylolacrylamid in Zusammenwirkung mit einem hiermit copolymerisierbaren anderen wasserlöslicnen Comonomeren. (Unter "wasserlöslich" versteht man, daß sich das Monomer bei der Polymerisationstemperatur zu > 5 Gew.-% in Wasser löst).

Ein besonderer Vorteil ist es, die erfindungsgemäß erhaltene Polymerdispersion ohne Einsatz von Acrylnitril zu konzipieren. Acrylnitril stellt wegen seiner Giftigkeit sowohl bei der Herstellung als auch bei der Anwendung eine ernsthafte Belastung der Umwelt dar.

Vorteilhaft für die guten mechanischen Eigenschaften der erfindungsgemäß erhaltenen Polymerdispersionen ist die Verwendung der hier definierten wasserlöslichen Monomeren, wobei die Kombination von N-Methylolacrylamid mit einem anderen oder mehreren wasserlöslichen Monomeren zu besonders vorteilhaften Eigenschaften führt.

Das Polymere wird in wäßriger Emulsion hergestellt.

Die Palette der verwendeten Emulgatoren erstreckt sich insbesondere auf die ethoxylierten Ester der langkettigen, aliphatisch gesättigten oder ungesättigten Monocarbonsäuren mit 14 - 20, vorzugsweise 16 - 18, C-Atomen und/oder die ethoxylierten Alkylphenole mit 8 bis 9 C-Atomen in der Alkylgruppe, wobei der Ethoxylierungsgrad bei beiden Produktgruppen zwischen 5 - 35 Mol Ethylenoxideinheiten vorzugsweise zwischen 10 - 20 Mol Ethylenoxideinheiten liegt.

Die Menge dieser Emulgatoren liegt im Bereich von 2 - 10 Gew.-%. vorzugsweise 6 - 8 Gew.-%, berechnet auf Gesamtmonomere. Bevorzugt werden zusätzlich geringe Mengen anionaktiver Emulgatoren. z.B. sulfatierte Fettalkohole mit 8 - 14, vorzugsweise 10 - 12 C-Atomen in der Kette, und zwar 0,1 - 0,5 vorzugsweise 0,1 - 0,3 %, oder aucn

EP 0 401 200 B2

ethoxylierte Alkohole mit einer Kettenlänge von 10 - 15, vorzugsweise 11 - 13 C-Atomen, in einem Prozentsatz von 0,3 - 1 %, vorzugsweise 0.5 - 0,7 % eingesetzt.

Es können die üblichen wasserlöslichen Initiatoren wie Ammoniumperoxodisulfat, Kaliumperoxodisulfat, Natriumperoxodisulfat, fallweise als Redoxsystem mit Na-Bisulfit, sowie den üblichen Redoxkatalysatoren aus Wasserstoffperoxid oder tert.-Butylhydroperoxid als Oxidationskomponente und aus Natriumformaldehydsulfoxylat als Reduktionskomponente verwendet werden. Als Kettenregler eignen sich die üblichen langkettigen Merkaptane sowie auch Hydrochinon.

Die Temperatur kann z.B. zwischen 65 und 85°C variiert werden. Der pH-Wert beträgt während der Polymerisation vorzugsweise 2,0 - 6.0, der pH-Wert des fertigen Produktes wird auf 4,5 - 9,5, vorzugsweise auf 7,0 eingestellt.

Man erhält Dispersionen, die in Kombination mit hydraulisch abbindenden Bindemitteln, wie eingangs beschrieben, besonders günstige Verarbeitungseigenschaften (geringe Viskosität bei hohem Kunststoffanteil) und mechanische Eigenschaften, wie hohe Dehnung, ergeben, wenn man ein zweistufiges Verfahren zu deren Herstellung anwendet. Dieses Verfanren ist dadurch gekennzeichnet, daß in einem ersten Schritt die wasserlöslichen Monomeren in Gegenwart der für die Emulsionspolymerisation erforderlichen Emulgatoren bis zu einem Umsatz von mindestens 15 %, bevorzugt 20 - 30 % polymerisiert werden und danach die weiteren Monomere dem Reaktionsgemisch gegebenenfalls stufenweise zugesetzt werden.

Die mit diesen Dispersionen hergestellten Zementschlämme haben je nach Art des verwendeten Emulgators und Temperatur eine Verarbeitungszeit von 2 - 8 Stunden.

Im Gegensatz zu Dispersionen, die aus gleichen Komponenten in einem üblichen Einschrittverfahren hergestellt werden, führen in einem solchen Zweischrittverfahren hergestellte Dispersionen zu einer weit niedrigeren Viskosität der Zementschlämme, was für eine bessere Benetzung spricht.

Auf Grund dieser Eigenschaften eignen sich die Zementschlämme für die Beschichtung und Abdichtung von Flachdächern, Terrassen, Kellern, etc.. wobei die gute Haftung auf Untergründen wie Bitumen, Beton. Eisenblech hervorzuheben ist.

Weiters eignen sich diese Mischungen als Korrosionsschutz und für die Reparatur von verwitterten Betonoberflächen.

Die Dispersionen eignen sich weiters für die Herstellung von Haftklebstoffen für die Kuverterzeugung, Heftpflaster oder selbsthaftende Etiketten.

Im Gegensatz zu Dispersionen, die aus gleichen Komponenten in einem üblichen Einschrittverfahren hergestellt sind, weisen die erfindungsgemäßen erhältlichen Dispersionen eine weit niedrigere Viskosität der Zementschlämme auf, was für eine bessere Benetzung spricht.

Eigene kinetische Untersuchungen haben gezeigt, daß nach Beendigung der ersten Stufe (Lösungspolymerisation) ein Polymerisationsumsatz von nur ca. 25% erreicht war, sodaß beim Einsetzen der Emulsionspolymerisation noch ausreichend wasserlösliche Mono- und Oligomere im Reaktionsgemisch vorhanden sind, um mit den wasserunlöslichen Monomeren zu copolymerisieren. Der Gehalt an Polymeren wurde durch Ausfällen in Äthanol bestimmt.

Die bessere Benetzung der nach dem neuen Verfahren hergestellten Dispersionen äußert sich auch in den Eigenschaften der ausgehärteten zementärem Mischung, wie höhere Dehnung und bessere Rückstellelastizität, Biegsamkeit.

Das Ergebnis sind Polymer/Zementmischungen mit 55 - 70 % Kunststoffanteil, die in der Dehnbarkeit bei gleichem Polymer/Zementmischungsverhältnis den bei einer durch normales einstufiges Polymerisationsverfahren hergestellten, sonst gleichen Dispersionen überlegen sind, oder die erfindungsgemäßen Polymerdispersionen vertragen größere Mengen Zementzusatz bei gleichen mechanischen Eigenschaften wie das weiter unten dargelegt ist.

Die Monomeren gemäß Anspruch 1 werden vorzugsweise in wäßriger Emulsion bei pH 2 - 6 polymerisiert. Als Hauptmonomere für die erfindungsgemäße Polymerzusammensetzung sind Acrylsäure- und Methacrylsäureester des Methanols, Ethanols, Isobutanols, n-Butanols, tert. Butanols und 2-Äthylhexanols von besonderem Interesse.

Es erwies sich als besonders vorteilhaft, eine Kombination von Monomeren gemäß Anspruch 1 zu verwenden, deren Homopolymere Glasumwandlungstemperaturen von unter -50°C, vorzugsweise < -60°C, z.B.2-Ethylhexylacrylat, Butylacrylat, Dodecylmethacrylat, bzw. eine Glasumwandlungstemperatur über +50°C, vorzugsweise > +60°C, z.B. Methylmethacrylat, bzw. Butylacrylat aufweisen.

Zusätzlich werden bei den erfindungsgemäß hergestellten Dispersionen 0,1 - 1,0 % vorzugsweise 3 - 5 C-Atome enthaltender monoolefinisch ungesättigter Mono- und/oder Dicarbonsäuren, wie z.B. Acrylsäure, Methacrylsäure, Maleinsäure, Fumarsäure verwendet.

Weiters ist es ein Merkmal der Erfindung, 1 - 5 Gew.-%, bezogen auf (a) + (b) eines N-Methylolamides einer ungesättigten Carbonsäure, wie z.B. N-Methylolacrylamid vorzugsweise in Kombination mit einem weiteren wasserlöslichen, copolymerisierbaren Monomeren in einer Menge von 0 - 3 Gew.-%, vorzugsweise 1 - 3 Gew.-%, bezogen auf (a) + (b), wie z.B. N-Vinylpyrolidon, 2-Hydroxyethylacrylat, 2-Hydroxypropylacrylat, Acrylamid, Vinylsulfonat, wasserlösliche ungesättigte Carbonsäuren, vorzugsweise Acrylsäure, Methacrylsäure einzusetzen.

Weiters besteht die Möglichkeit, andere Comonomere, wie z.B. Styrol, Vinylacetat, Vinylchlorid, Butadien, Cl-Butadien, Vinylsilane, bevorzugt Vinyltriethoxysilane, Vinyltri(2-methoxy-, ethoxy)silane, gamma-Methycryloxyproyltrime-

4

thoxysilane einzusetzen.

Für die Herstellung der erfindungsgemäßen Polymerdispersionen hat sich folgende Vorgangsweise bewährt.

Stufe 1:

In der gesamten, für die Polymerisation der Dispersion notwendigen Wassermenge werden die erforderlichen Emuigatoren gelöst und die wasserlöslichen Monomere [(c), (d), (e)] zugesetzt. Die Konzentration der gelösten wasserlöslichen Monomere liegt dabei für die oben genannte bevorzugte Monomerzusammensetzung im Bereich von 3 - 6 Gew.-%, vorzugsweise 3,5 - 4,5 Gew.-%. Überraschenderweise zeigt sich, daß höhere Konzentrationen zu keiner brauchbaren Dispersion führen und auch geringere Konzentrationen zur Koagulation führen.

Ebenfalls ist es überraschend, daß die Polymerisation bevorzugt bei pH-Werten von 5,5 bis 6,0 durchgeführt werden kann. Höhere pH-Werte als 5,5 bis 6,0 können zur Koagulation der Dispersion führen. Die Polymerisation in Lösung erfolgt in der Regel in einem Temperaturbereich von 40 - 60°C, vorzugsweise bei 50 - 55°C. In Abweichung zum einstufigen Verfanren wird die Gesamtmenge der Kettenüberträger, wie z.B. Hydrochinon, oder tert.-Dodecylmerkaptan in einer Konzentration von 0,012 - 0,017 Gew.-%, bezogen auf die Menge des Reaktionsgemisches, bereits bei der Lösungspolymerisation zugesetzt.

Auch die gesamte Menge der Emulgatoren wird in der ersten Stufe, d.h. der Lösungspolymerisation, eingesetzt. Die Palette der verwendeten Emulgatoren erstreckt sich im wesentlichen auf die ethoxylierten Ester der langkettigen, aliphatisch gesättigten oder ungesättigten Monocarbonsäuren mit 14 - 20, vorzugsweise 16 - 18 C-Atomen und/oder die ethoxylierten Alkylphenole mit 8 bis 9 C-Atomen in der Alkylgruppe, wobei der Ethoxylierungsgrad bei beiden Produktgruppen zwischen 5 - 35 Mol Ethylenoxideinheiten vorzugsweise zwischen 10 - 20 Mol Ethylenoxideinheiten liegt.

Die Menge dieser Emulgatoren liegt im Bereich von 2 - 10 Gew.-% vorzugsweise 6 - 8 Gew.-% berechnet auf Gesamtmonomere. Zusätzlich werden geringe Mengen anionaktiver Emulgatorentypen, z.B. sulfatierte Fettalkohole mit 8 - 14, vorzugsweise 10 - 12. C-Atomen in der Kette und zwar 0,1 - 0,5; vorzugsweise 0,1 - 0,3 %, als auch ethoxylierte Alkohole mit einer Kettenlänge von 10 - 15, vorzugsweise 11 - 13 C-Atomen, in einem Prozentsatz von 0,3 - 1 %, vorzugsweise 0,5 - 0,7 % mitverwendet.

Es können die üblichen wasserlöslichen Initiatoren wie Ammoniumperoxodisulfat, Kaliumperoxodisulfat, Natriumperoxodisulfat, fallweise als Redoxsystem mit Na-Bisulfit, sowie die üblichen Redoxkatalysatoren aus Wasserstoffperoxid oder tert.-Butylhydroperoxid als Oxidationskomponente und aus Natriumformaldehydsulfoxylat als Reduktionskomponente verwendet werden.

Stufe 2:

In das Reaktionsgemisch der Stufe 1 werden ohne Unterbrechung der Reaktion bei einem Umsatz der wäßrigen Monomeren von mindestens 15%, bevorzugt, 20 - 30 %, die wasserunlöslichen Monomeren und üblichen Initiatoren bei einer Temperatur von 60 - 80°C, vorzugsweise 70°C dazudosiert.

Die folgenden Beispiele dienen der näheren Erläuterung der Erfindung, ohne diese einzuschränken:

Beispiel 1:

Gearbeitet wurde in einer Planschliffglasapparatur mit 2 l Inhalt, Metallankerrührer, Doppelmantel, Rückflußkühler und Dosiergefäßen. 179.2 g entionisiertes Wasser wird vorgelegt, 1,8 g Acrylsäure zugesetzt und mit einer 50 %-igen NaOH-Lösung wird der pH-Wert auf ca. 6,0 eingestellt. Dann werden 0.08 g Natriumformaldehydsulfoxylat, 9,0 g N-Methylolacrylamid, 5,3 g N-Vinylpyrolidon, 0,4 g Isopropylalkohol,0,06 g Hydrochinon zugesetzt. Zu dieser Lösung wird noch folgende Emulgatorlösung zugesetzt in 152.5 g entionisiertem Wasser werden 1,8 g eines sulfatierten Laurylalkohols, 6,4 g eines ethoxylierten Isotridecanols (Ethoxylierungsgrad 5), sowie 37,0 g ethoxylierten Stearinsäureesters (Ethoxylierungsgrad 20) und 0,4 g Natriumbisulfits (NaHSO3) gelöst.

Dann werden 0,4 g Ammoniumperoxisulfat in 3,6 g entionisiertem Wasser gelöst und zum obigen Gemisch zugesetzt und bei 55°C 1,5 Stunden polymerisiert.

In Zulauf I und Zulauf II bei 70°C 3 Stunden Fang gleichmäßig zudosiert.

Der Zulauf I besteht aus 479,0 g 2-Ethylhexylacrylat, 46,0 g Methylmethacrylat und 1,8 g Acrylsäure. Zulauf II besteht aus 1,35 g Ammoniumperoxisulfat gelöst in 60,0 g entionisiertem Wasser. Nach Beendigung des Zulaufes werden 0,4 g t-Butylperoxid (80 %-ig) gelöst in 4,0 g entionisiertem Wasser, sowie 0.5 g Natriumformaldehydsulfoxylat gelöst in 5,0 g entionisiertem Wasser zugesetzt und 1,5 Stunden bei 90°C nachpolymerisiert.

Nach dem Abkühlen erhält man eine Polymerdispersion mit ca. 59 % Trockensubstanzgehalt, pH-Wert 5,4, Viskosität ca. 300 mPas, die einen stark klebrigen Film ergibt.

Beispiel 2:

In der gleichen Apparatur wie in Beispiel 1 werden 179.2 g entionisiertes Wasser vorgelegt, 1.8 g Acrylsäure zugesetzt und mit 50 %-iger Natronlauge auf einen pH-Wert von 6,0 eingestellt. Dann werden 0.08 g Natriumformaldehydsulfoxylat, 9,0 g N-Methylolacrylamid, 5,3 g N-Vinylpyrolidon, 0,4 g Isopropylalkohol und 0.06 g Hydrochinon zugesetzt.

Zu dieser Lösung wird noch folgende Emulgatorlösung zugesetzt: In 152.6 g entionisiertem Wasser werden 1,8 g sulfatierten Laurylalkohols, 6,4 g ethoxylierten Isotridecandiols (Ethoxylierungsgrad 5), 24,6 g ethoxylierten p-Nonylphenols (Ethoxylierungsgrad 13), 16,4 g ethoxylierten p-Nonylphenols (Ethoxylierungsgrad 10), sowie 0,4 g Natriumbisulfits (NaHSO$_3$) gelöst. Nach dem gleicnen Verfahren wie in Beispiel 1 und gleichen Zuläufen I und II erhält man eine ca. 59 %-ige Polymerdispersion mit einer Viskosität von ca 200 mPas (25°C Epprechtviskosimeter), pH-Wert 5,6, die einen stark klebrigen Film ergibt.

Beispiel 3:

In der gleichen Apparatur wie in Beispiel 1 werden 179 g entionisiertes Wasser vorgelegt, darin werden 9,0 g N-Methylolacrylamid, 5,3 g Acrylamid, 0,4 g Isoprpylalkohol, 0,5 g Natriumacetat und 0.06 g Hydrochinon gelöst. Dazu setzt man eine Emulgatorlösung entsprechend dem Beispiel 2.

Anschließend gibt man dazu 0,4 g Ammoniumperoxodisulfat gelöst in 4,0 g entionisiertem Wasser und polymerisiert 1,5 Stunden bei 55°C. Anschließend werden Zulauf I und Zulauf II bei 70°C 3 Stunden lang gleichmäßig zudosiert.

Der Zulauf I besteht aus 447,0 g 2-Ethylhexylacrylat, 75,9 g t-Butylacrylat und 3,6 g Acrylsäure. Der Zulauf II besteht aus 1.35 g Ammoniumperoxodisulfat gelöst in 60.0 g entionisiertem Wasser.

Man verfährt wie in Beispiel 1 und erhält eine ca. 59 %-ige Polymerdispersion mit ca. 150 mPas (25°C Epprechtviskosimeter), pH-Wert 4,2, die einen stark klebrigen Film ergibt.

Beispiel 4:

In der gleichen Apparatur wie in Beispiel 1 werden im Reaktionsgefäß 258,0 g entionisiertes Wasser vorgelegt und darin 6,4 g ethoxylierten Isotridecandiols (Ethoxylierungsgrad 5), 1,8 g sulfatierten Laurylalkohols, 37,0 g ethoxylierten Esters der Stearinsäure (Ethoxylierungsgrad 10) und 9,0 g ethoxylierten Esters der Stearinsäure (Ethoxylierungsgrad 20), sowie 0,06 g Hydrochinon unter Rühren und Erwärmen auf 85°C gelöst.

Aus getrennten Dosiergeräten dosiert man zunächst Zulauf 1 und Zulauf II mit einer Geschwindigkeit, daß der Zulauf innerhalb 3 Stunden beendet ist.

Der Zulauf I besteht aus 46,0 g Methylmethacrylat, 479,0 g 2-Ethylhexylacrylat und 3,6 g Acrylsäure.

Der Zulauf II besteht aus 0,67 g t-Butylhydroperoxid 80 %-ig und 10,0 g entionisiertem Wasser.

Fünf Minuten nach dem Beginn des Zulaufes I und II beginnt man mit der Zudosierung des Zulaufes III, bestehend aus 9,0 g N-Methylolacrylamid und 69,0 g entionisiertem Wasser, in der Weise, daß der Zulauf III gleichmäßig mit den Zuläufen I und II innerhalb 3 Stunden beendet ist.

Während der Polymerisation wird die Reaktionstemperatur auf 80 - 85°C gehalten und diese Temperatur 1 Stunde zur Nachpolymerisation aufrecht gehalten.

Für die Nachreaktion werden nach Ende des Zulaufes 0,2 g t-Butylhydroperoxids 80 %-ig, gelöst in 4,0 g entionisiertem Wasser, sowie 0,5 g Natriumformaldehydsulfoxylat, gelöst in 5,0 g entionisiertem Wasser, zugesetzt.

Nach Abkühlen erhält man eine ca. 59 %-ige Polymerdispersion mit einer Viskosität von ca. 500 mPas (25°C Epprechtviskosimeter), die einen stark klebrigen Film ergibt.

Beispiel 5:

Gearbeitet wurde in einer Planschliffglasapparatur mit 2 l Innalt, Metallankerrührern, Doppelmantel, Rückflußkühler und Dosiergefäßen, 258 g entionisiertes Wasser wurden vorgelegt und darin 6,4 g ethoxylierten Isotridecanols (Ethoxylierungsgrad 5), 1,8 g sulfatierten Laurylalkohols, 37,0 g ethoxylierten Esters der Stearinsäure (Ethoxylierungsgrad 10), sowie 0.06 g Hydrochinon unter Rühren und Erwärmen auf 80°C gelöst.

Aus getrennten Dosiergeräten dosiert man zunächst Zulauf I und Zulauf II mit einer Geschwindigkeit, daß der Zulauf innerhalb 3 Stunden beendet ist. Der Zulauf I besteht aus 45,4 g Methylmethacrylat, 479,0 g 2-Ethylhexylacrylat, 5,3 g 2-Hydroxyäthylacrylat sowie 3,6 g Acrylsäure. Zulauf II besteht aus 0,67 g t-Butylhydroperoxid 80 %-ig und 10,0 g entionisiertem Wasser.

5 Minuten nach Beginn des Zulaufes I und II beginnt man mit der Zudosierung des Zulaufes III, bestehend aus 9,0 g Methylolacrylamid und 69,0 g entionisiertem Wasser, in der Weise, daß Zulauf III gleichmäßig mit den Zuläufen I und II innerhalb 3 Stunden beendet ist. Während der Polymerisation wird die Reaktionstemperatur auf 80 - 85°C gehalten und diese Temperatur 1 Stunde zur Nachpolymerisation aufrechtgehalten. Nach dem Abkühlen neutralisiert man die Dispersion mit einer 15 %-igen Ätznatronlösung auf pH-Wert von ca. 7 und erhält eine ca. 59 %-ige Dispersion mit einer Viskosität von ca. 1000 mPas (25°C Epprecht Viskosimeter), die ebenfalls einen stark klebenden Film ergibt.

Beispiel 6:

In der gleichen Apparatur und nach dem gleichen Verfahren wie in Beispiel 5 wird folgende Zusammensetzung des Zulaufes I und III eingesetzt:

| | |
|---|---|
| Zulauf I: | 46,0 g Methylmethacrylat |
| | 479,0 g 2-Ethylhexylacrylat |
| | 3,6 g Acrylsäure |
| Zulauf II: | 0,67 g tert.-Butylhydroperoxid |
| | 10.0 g $H_2O$ entionisiert |
| Zulauf III: | 9,0 g N-Methylolacrylamid |
| | 5,3 g Acrylamid |
| | 69,0 g Wasser entionisiert |

Das Ergebnis ist eine Polymerdispersion mit ca. 59 % Trockensubstanz, mit einer Viskosität von ca. 1500 mPas (25°C Epprecht Viskosimeter), die einen stark klebrigen Film ergibt.

Beispiel 7:

In der gleichen Apparatur und nach dem gleichen Verfahren wie in Beispiel 5 wird folgende Zusammensetzung des Zulaufes I und III eingesetzt

| | |
|---|---|
| Zulauf I: | 46,0 g Methylmethacrylat |
| | 479,0 g 2-Ethylhexylacrylat |
| | 3,6 g Acrylsäure |
| Zulauf II: | 0,67 g t-Butylhydroperoxid |
| | 10,0 g entionisiertes Wasser |
| Zulauf III: | 9,0 g N-Methylolacrylamid |
| | 5,3 g N-Vinylpyrolidon |
| | 69,0 g Wasser entionisiert |

Das Ergebnis ist eine ca. 59 %-ige Polymerdispersion mit einer Viskosität von ca. 500 mPas (25°C Epprecht Viskosimeter), die einen stark klebrigen Film ergibt.

Beispiel 8:

In der gleichen Apparatur und nach dem gleichen Verfahren wie in Beispiel 5 werden 258 g entionisertes Wasser vorgelegt und darin 6,4 g ethoxylierten Ethylalkohols (Ethoxylierungsgrad 5), 1,8 g sulfatierten Laurylalkohols, 24,6 g ethoxylierten p-Nonylphenols (Ethoxylierungsgrad 13) und 16,4 g ethoxylierten p-Nonylphenols (Ethoxylierungsgrad 10), sowie 0,6 g Hydrochinon gelöst, wobei die Zuläufe I und III gleich sind wie im Beispiel 3.
Man erhält eine ca. 59 %-ige Polymerdispersion mit einer Viskosität von ca. 300 mPas (25°C Epprecht Viskosimeter), die einen stark klebrigen Film ergibt.

B) Einsatz der Polymerdispersionen für die Herstellung von Zementschlämmen

Mit den nach Beispielen 5 bis 8 hergestellten Polymerdispersionen wurden Zementschlämme folgender Zusammensetzung hergestellt:

| | |
|---|---|
| Zement | 33,3 Gew.tle |
| Quarzsand 0,1 - 0,3 mm | 33,3 Gew.tle |
| Polymerdispersion | 33,3 Gew.tle |
| | 99,9 Gew.tle |

In der Tabelle I sind die Eigenschaften der hergestellten Schlämme, sowie die Eigenschaften der ausgehärteten Probekörper angegeben:

Tabelle I

| Schlämme | Viskosit. mPas 25°C | Durchlaufmenge DIN B10 in g * | Topfzeit Stdn. | Zugscherfestigkeit 28 T(N/mm2) | Dehnung n. Alterg. 28 T in % |
|---|---|---|---|---|---|
| AB 1 | 13.000 | 10 g | 3 | 0,315 | 150 % |
| AB 2 | 14.000 | 14 g | 3 | 0,305 | 150 % |
| AB 3 | 11.000 | 16 g | 3 | 0,350 | 160 % |
| AB 4 | 10.000 | 12 g | 8 | 0,310 | 140 % |

\* Es wurde die Menge gewogen, die durch einen DIN Becher mit einem Durchmesser von 10 mm innerhalb 3 Minuten durchfließt.

**Beispiel 9:**

Gearbeitet wurde in einer Planschliffglasapparatur mit 2 l Inhalt. Metallankerrührer, Doppelmantel, Rückflußkühler und Dosiergefäßen. 179,2 g entionisiertes Wasser wird vorgeiegt, 1,8 g Acrylsäure zugesetzt und mit einer 50 %-igen NaOH-Lösung wird der pH-Wert auf ca. 6,0 eingestellt. Dann werden 0.08 g Natriumformaldehydsulfoxylat, 9,0 g N-Methylolacrylamid, 5,3 g N-Vinylpyrolidon, 0,4 g Isopropylalkohol, 0,06 g Hydrochinon zugesetzt. Zu dieser Lösung wird noch folgende Emulgatorlösung zugesetzt in 152,6 g entionisiertem Wasser werden 1,8 g eines sulfatierten Laurylalkohols, 6,4 g eines ethoxylierten Isotridecanols (Ethoxylierungsgrad 5), sowie 37,0 g ethoxylierten Stearinsäureesters (Ethoxylierungsgrad 20) und 0,4 g Natriumbisulfits ($NaHSO_3$) gelöst.
Dann werden 0,4 g Ammoniumperoxisulfat in 3,6 g entionisiertem Wasser gelöst und zum obigen Gemisch zugesetzt und bei 55°C 1,5 Stunden polymerisiert.
Anschließend werden Zulauf I und Zulauf II bei 70°C 3 Studen lang gleichmäßig zudosiert.
Der Zulauf I besteht aus 479,0 g 2-Ethylhexylacrylat, 46,0 g Methylmethacrylat und 1,8 g Acrylsäure.
Zulauf II besteht aus 1,35 g Ammoniumperoxisulfat gelöst in 60,0 g entionisiertem Wasser.
Nach Beendigung des Zulaufes werden 0,4 g t-Butylperoxid (80 %-ig) gelöst in 4,0 g entionisiertem Wasser, sowie 0,5 g Natriumformaldehydsulfoxylat gelöst in 5,0 g entionisiertem Wasser zugesetzt und 1,5 Stunden bei 90°C nachpolymerisiert.
Nach dem Abkühlen erhält man eine Polymerdispersion mit ca. 59 % Trockensubstanzgehalt, pH-Wert 5,4, Viskosität ca. 300 mPas, die einen stark klebrigen Film ergibt.

**Beispiel 10:**

In der gleichen Apparatur wie in Beispiel 9 werden 179,2 g entionisiertes Wasser vorgelegt, 1,8 g Acrylsäure zugesetzt und mit 50 %-iger Natronlauge auf einen pH-Wert von 6,0 eingestellt. Dann werden 0,08 g Natriumfomaldehydsulfoxylat, 9,0 g N-Methylolacrylamid, 5,3 g N-Vinylpyrolidon, 0,4 g Isopropylalkohol und 0,06 g Hydrochinon zugesetzt.
Zu dieser Lösung wird noch folgende Emulgatorlösung zugesetzt: in 152,6 g entionisiertem Wasser werden 1,8 g sulfatierten Laurylalkohols, 6,4 g ethoxylierten Isotridecandiols (Ethoxylierungsgrad 5), 24,6 g ethoxylierten p-Nonylphenols (Ethoxylierungsgrad 13), 16,4 g ethoxylierten p-Nonylphenols (Ethoxylierungsgrad 10), sowie 0,4 g Natriumbisulfits (NaHSO3) gelöst. Nach dem gleichen Verfahren wie in Beispiel 5 und gleichen Zuläufen I und II erhält man eine ca. 59 %-ige Polymerdispersion mit einer Viskosität von ca. 200 mPas (25°C Epprechtviskosimeter), pH-Wert 5,6, die einen stark klebrigen Film ergibt.

**Beispiel 11:**

In der gleichen Apparatur wie in Beispiel 9 werden 179,2 g entionisiertes Wasser vorgelegt, darin werden 9,0 g N-Methylolacrylamid, 5,3 g Acrylamid, 0,4 g Isopropylalkohol, 0,5 g Natriumacetat und 0,06 g Hydrochinon gelöst. Dazu setzt man eine Emulgatorlösung entsprechend dem Beispiel 10.
Anschließend gibt man dazu 0,4 g Ammoniumperoxodisulfat gelöst in 4,0 g entionisiertem Wasser und polymerisiert 1,5 Stunden bei 55°C. Anschließend werden Zulauf I und Zulauf II bei 70°C 3 Stunden lang gleichmäßig zudosiert
Der Zulauf I besteht aus 447,0 g 2-Ethylhexylacrylat, 75,9 g t-Butylacrylat und 3,6 g Acrylsäure.
Der Zulauf II besteht aus 1,35 g Ammoniumperoxodisulfat gelöst in 60,0 g entionisiertem Wasser.
Man verfährt wie in Beispiel 9 und erhält eine ca. 59 %-ige Polymerdispersion mit ca. 150 mPas (25°C Epprechtviskosimeter), pH-Wert 4,2, die einen stark klebrigen Film ergibt.

Einsatz der Polymerdispersion für die Herstellung von Zementschlämmen

Mit den nach Beispiel 9 bis 11 hergestellten Polymerdispersionen werden Zementschlämme folgender Zusammensetzung hergestellt:

| Zement | 33,3 Gew.tle |
|---|---|
| Quarzsand 0,1 - 0,3 mm | 33,3 Gew.tle |
| Polymerdispersion | 33,3 Gew.tle |
| | 99,9 Gew.tle |

In der Tabelle II sind die Eigenschaften der hergestellten Schlämme, sowie die Eigenschaften der ausgehärteten Probekörper angegeben:

Tabelle II

| Dispers. von Beispiel | Viskosität mPas 25°C | Durchlaufmenge DIN B10 3 Min (g) | Topfzeit Std. | Zugscherfestigkeit 28 T(N/mm2) | Dehnung n. Alterg. 28 T in % |
|---|---|---|---|---|---|
| 5 | 4.500 | alles in 1 Min. | 4 | 0,265 | 240 % |
| 6 | 3.900 | alles in 1 Min. | 8 | 0,240 | 220 % |
| 7 | 5.300 | alles in 1 Min. | 8 | 0,230 | 210 % |

**Patentansprüche**

1. Verfahren zur Herstellung von Copolymerisaten durch radikalische Polymerisation mehrerer olefinisch ungesättigter Monomeren in wäßriger Emulsion in Gegenwart von Emulgatoren, wobei mindestens eines der Monomeren eine Löslichkeit von >5 Gew.% in Wasser unter den Reaktionsbedingungen aufweist, dadurch gekennzeichnet, daß in einem ersten Schritt das oder die wasserlöslichen Monomeren (c, d, e) in Gegenwart der Emulgatoren bis zu einem Umsatz von mindestenes 15%, vorzugsweise 20 - 30%, polymerisiert und danach das oder die weiteren Monomeren (a, b, f) dem Reaktionsgemisch, gegebenenfalls stufenweise, zugesetzt werden, wobei folgende Monomeren eingesetzt werden:

a) 50 - 97 Gew.%, bezogen auf (a) + (b), mindestens eines nicht wasserlöslichen Monomeren, dessen Homopolymer eine Tg < -50°C aufweist;
b) 3 - 50 Gew.%, bezogen auf (a) + (b), mindestens eines mit (a) copolymerisierbaren, nicht wasserlöslichen Monomeren, dessen Homopolymer eine Tg > +50°C aufweist;
c) 0,1 - 1,0 Gew.%, bezogen auf (a) + (b), einer ungesättigten Carbonsäure;
d) 1,0 - 5 Gew.%, bezogen auf (a) + (b), eines N-Methylolamides einer ungesättigten Carbonsäure;
e) 0 - 3 Gew.%, vorzugsweise 1 - 3 Gew.%, bezogen auf (a) + (b), eines mit (c) und (d) copolymerisierbaren weiteren wasserlöslichen Monomeren;
f) 0 - 100 Gew.%, bevorzugt 0 - 50 Gew.%, insbesondere 0 - 20 Gew.%, bezogen auf (a) + (b), an weiteren nicht wasserlöslichen Comonomeren.

2. Verfahren nach Anspruch 1, dadurch gekennzeichnet, daß bei der Herstellung des wasserlöslichen Polymeren folgende Emulgatoren Verwendung finden:
Ethoxylierte Ester der langkettigen, aliphatisch gesättigten oder ungesättigten Monocarbonsäuren mit 14-20, vorzugsweise 16-18 C-Atomen und/oder die ethoxylierten Alkylphenole mit 8-9 C-Atomen in der Alkylgruppe, wobei der Ethoxylierungsgrad bei beiden Produktgruppen zwischen 5-35 Mol Ethylenoxideinheiten, vorzugsweise zwischen 10-20 Mol Ethylenoxideinheiten, liegt und anionaktive Emulgatoren, z.B. sulfatierte Fettalkohole mit 8-14, vorzugsweise 10-12 C-Atomen in der Kette, und zwar 0,1-0,5, vorzugsweise 0,1-0,3%, oder auch ethoxylierte Alkohole mit einer Kettenlänge von 10-15, vorzugsweise 11-13 C-Atomen.

3. Verfahren nach Anspruch 1 oder 2, dadurch gekennzeichnet, daß die Konzentration der ethoxylierten Ester oder Äther in einem Bereich von 2-10 Gew.%, vorzugsweise 6-8 Gew.%, berechnet auf das gesamte Monomergemisch, und die Konzentration der anionaktiven Emulgatoren von 0,1-0,5 Gew.%, vorzugsweise 0,1-0,3 Gew.%, und die Konzentration der ethoxylierten Alkohole 0,3-1,0 Gew.%, vorzugsweise 0,5-0,7 Gew.%, beträgt.

4. Verfahren nach den Ansprüchen 1 bis 3, dadurch gekennzeichnet, daß die Temperatur bei der Polymerisation in der ersten Stufe 40-60°C, vorzugsweise 50-55°C, beträgt, und daß die Temperatur in der Stufe 2 60-80°C, vorzugsweise 70°C, beträgt.

5. Verfahren nach den Ansprüchen 1 bis 4, dadurch gekennzeichnet, daß der pH-Wert der ersten Stufe 5,5-6,0 beträgt.

6. Verfahren nach den Ansprüchen 1 bis 5, dadurch gekennzeichnet, daß die wasserlöslichen Monomere in einer Konzentration von 3-6 Gew.%, vorzugsweise 3,5 - 4,5 Gew.%, bezogen auf die wäßrige Phase, eingesetzt werden.

7. Verfahren nach den Ansprüchen 1 bis 6, dadurch gekennzeichnet, daß die gesamte Menge von Kettenüberträgern in der ersten Stufe eingesetzt wird.

8. Verfahren nach den Ansprüchen 1 bis 7, dadurch gekennzeichnet, daß der verwendete Kettenüberträger Hydrochinon oder p.tert-Butylbrenzcatechin ist.

9. Verfahren nach den Ansprüchen 1 bis 8, dadurch gekennzeichnet, daß die Konzentration der Kettenüberträger gesamt 0,012 - 0,017 Gew.%, bezogen auf die Menge des Reaktionsgemisches, ist.

10. Verfahren nach den Ansprüchen 1 bis 9, dadurch gekennzeichnet, daß 65 - 97 Gew.%, insbesondere 70 - 95 Gew.%, bezogen auf (a) + (b), an Monomeren (a) eingesetzt werden.

11. Verfahren nach den Ansprüchen 1 bis 10, dadurch gekennzeichnet, daß (a) n-Butyl, tert-Butylacrylat, n-Dodecylmethacrylat und/oder 2-Äthylhexylacrylat ist.

12. Verfahren nach den Ansprüchen 1 bis 11, dadurch gekennzeichnet, daß (b) Methylmethacrylat oder tert-Butylmethacrylat, Äthylmethacrylat, Phenylmethacrylat, 3,3-Dimethyl-2-butylmethacrylat, Isopropylmethacrylat ist.

13. Verfahren nach den Ansprüchen 1 bis 12, dadurch gekennzeichnet, daß (c) (Meth)acrylsäure, Fumarsäure und/oder Maleinsäure, insbesondere Acrylsäure ist.

14. Verfahren nach den Ansprüchen 1 bis 13, dadurch gekennzeichnet, daß (d) das N-Methylolamid von (Meth)acrylsäure, Fumarsäure und/oder Maleinsäure ist, insbesondere N-Methylolacrylamid.

15. Verfahren nach den Ansprüchen 1 bis 14, dadurch gekennzeichnet, daß (e) Acrylamid, n-Vinylpyrrolidon und/oder ein Hydroxyalkyl(meth)acrylat und/oder eine wasserlösliche ungesättigte Carbonsäure, vorzugsweise Acrylsäure oder Methacrylsäure, ist.

16. Verwendung einer wäßrigen Dispersion enthaltend 40-70 Gew.%, vorzugsweise 50-60 Gew.%, eines Copolymerisates, hergestellt nach einem der Ansprüche 1 bis 15, als Bindemittel für die Herstellung konzentrierter Zementschlämme mit einem Kunststoffanteil von 35-60 Gew.%, bezogen auf Zement, wobei in bevorzugter Weise die Dispersion durch Copolymerisation der Monomeren (a) bis (e) in wäßriger Emulsion in Gegenwart von

> g) 2-10% eines ethoxylierten Esters der langkettigen aliphatisch gesättigten oder ungesättigten Monocarbonsäuren mit 14-20, vorzugsweise 16-18 C-Atomen und/oder eines ethoxylierten Alkylphenols mit 8-9 C-Atomen in der Alkylgruppe,
> h) 0,1 - 0,5%, vorzugsweise 0,1 - 0,3% eines sulfatierten Fettalkohols mit 8-14, vorzugsweise 10 - 12 C-Atomen in der Kette,
> i) 0,3 - 1,0% vorzugsweise 0,5 - 0,7% ethoxylierten Alkohols mit einer Kettenlänge von 5-10, vorzugsweise 6-8 c-Atomen, erhalten wurde, wobei

sich die Angaben in Gew.% auf die Gesamtmenge der Monomeren beziehen und die Gesamtmenge der Monomeren vorzugsweise im Bereich von 35-65 Gew.%, bezogen auf die Summe der Menge an Monomeren, Dispergierhilfsmittel und Wasser liegt.

17. Härtbare Mischung, enthaltend 50-70 Gew.% Zement und 30-60 Gew.% einer Dispersion nach Anspruch 16.

18. Verwendung von Zementschlämmen gemäß Anspruch 17 für das Beschichten und Abdichten von Dächern, Terrassen, Kellern, sowie als Korrosionsschutz für metallische Oberflächen oder stahlarmierten Beton und die Reparatur von verwitterten Betonoberflächen.

**Claims**

1. Process for the preparation of copolymers by free radical polymerization of two or more olefinically unsaturated monomers in aqueous emulsion in the presence of emulsifiers, at least one of the monomers having a solubility of > 5% by weight in water under the reaction conditions, characterized in that, in a first step, the water-soluble monomer or monomers (c, d, e) is or are polymerized in the presence of the emulsifiers up to a conversion of at least 15%, preferably 20 - 30%, and thereafter, the other monomer or monomers (a, b, f) is or are added to the reaction mixture, if appropriate stepwise, the following monomers being employed:

   a) 50 - 97 % by weight, based on (a) + (b), of at least one monomer which is not water-soluble, the homopolymer of which has a Tg < -50°C;
   b) 3 - 50 % by weight, based on (a) + (b) of at least one monomer which is copolymerizable with (a) and is not water-soluble, the homopolymer of which has a Tg > +50°C;
   c) 0.1 - 1.0 % by weight, based on (a) + (b), of an unsaturated carboxylic acid;
   d) 1.0 - 5 % by weight, based on (a) + (b), of an N-methylolamide of an unsaturated carboxylic acid;
   e) 0 - 3 % by weight, preferably 1 - 3 % by weight, based on (a) + (b), of another monomer which is copolymerizable with (c) and (d) and is water-soluble;
   f) 0 - 100 % by weight, preferably 0 - 50 % by weight, in particular 0 - 20 % by weight, based on (a) + (b), of other comonomers which are not water-soluble.

2. Process according to Claim 1, characterized in that the following emulsifiers are used for the preparation of the water-soluble polymer:
   ethoxylated esters of long-chain, aliphatic saturated or unsaturated monocarboxylic acids having 14 - 20, preferably 16 - 18, C atoms and/or ethoxylated alkyl phenols having 8 - 9 C atoms in the alkyl group, the degree of ethoxylation of both product groups being between 5 and 35 mol of ethylene oxide units, preferably between 10 and 20 mol of ethylene oxide units, and anionic emulsifiers, for example sulphated fatty alcohols having 8 - 14, preferably 10 - 12, C atoms in the chain, and specifically 0.1 - 0.5, preferably 0.1 - 0.3%, or else ethoxylated alcohols having a chain length of 10 - 15, preferably 11 - 13, C atoms.

3. Process according to Claim 1 or 2, characterized in that the concentration of the ethoxylated esters or ethers is in a range from 2 - 10% by weight, preferably 6 - 8% by weight, calculated with respect to the total monomer mixture, and the concentration of the anionic emulsifiers is 0.1 - 0.5% by weight, preferably 0.1 - 0.3% by weight, and the concentration of the ethoxylated alcohols is 0.3 - 1.0% by weight, preferably 0.5 - 0.7% by weight.

4. Process according to Claims 1 to 3, characterized in that the temperature during the polymerization in the first stage is 40 - 60°C, preferably 50 - 55°C, and in that the temperature in stage 2 is 60 - 80°C, preferably 70°C.

5. Process according to Claims 1 to 4, characterized in that the pH in the first stage is 5.5 - 6.0.

6. Process according to Claims 1 to 5, characterized in that the water-soluble monomers are employed in a concentration of 3 - 6% by weight, preferably 3.5 - 4.5% by weight, based on the aqueous phase.

7. Process according to Claims 1 to 6, characterized in that the total amount of chain transfer agents is employed in the first stage.

8. Process according to Claims 1 to 7, characterized in that the chain transfer agent used is hydroquinone or p-tert-butylpyrocatechol.

9. Process according to Claims 1 to 8, characterized in that the concentration of the chain transfer agents is 0.012 to 0.017% by weight in total, based on the amount of reaction mixture.

10. Process according to Claims 1 to 9, characterized in that 65 - 97% by weight, in particular 70 - 95% by weight, based on (a) + (b), of monomer (a) are employed.

11. Process according to Claims 1 to 10, characterized in that (a) is n-butyl or tert-butyl acrylate, n-dodecyl methacrylate and/or 2-ethylhexyl acrylate.

12. Process according to Claims 1 to 11, characterized in that (b) is methyl methacrylate or tertbutyl methacrylate, ethyl methacrylate, phenyl methacrylate, 3,3-dimethyl-2-butyl methacrylate or isopropyl methacrylate.

13. Process according to Claims 1 to 12, characterized in that (c) is (meth)acrylic acid, fumaric acid and/or maleic acid, in particular acrylic acid.

14. Process according to Claims 1 to 13, characterized in that (d) is the N-methylolamide of (meth)acrylic acid, fumaric acid and/or maleic acid, in particular N-methylolacrylamide.

15. Process according to Claims 1 to 14, characterized in that (e) is acrylamide, n-vinylpyrrolidone and/or a hydroxyalkyl (meth)acrylate and/or a water-soluble unsaturated carboxylic acid, preferably acrylic acid or methacrylic acid.

16. Use of an aqueous dispersion comprising 40 - 70% by weight, preferably 50 - 60% by weight, of a copolymer prepared according to one of Claims 1 to 15, as a binder for the preparation of concentrated cement slurries having a polymer content of 35 - 60% by weight, based on cement, the dispersion preferably being obtained by copolymerization of monomers (a) to (e) in aqueous emulsion in the presence of

> g) 2 - 10% of an ethoxylated ester of long-chain aliphatic saturated or unsaturated monocarboxylic acids having 14 - 20, preferably 16 - 18 C atoms and/or of an ethoxylated alkyl phenol having 8 - 9 C atoms in the alkyl group
> h) 0.1 - 0.5%, preferably 0.1 - 0.3%, of a sulphated fatty alcohol having 8 - 14, preferably 10 - 12, C atoms in the chain
> i) 0.3 - 1.0%, preferably 0.5 - 0.7%, of ethoxylated alcohol having a chain length of 5 - 10, preferably 6 - 8, C atoms, wherein

> the data in % by weight relate to the total amount of monomers and the total amount of monomers is preferably in the range of 35 - 65% by weight, based on the sum of the amount of monomers, dispersing auxiliaries and water.

17. Hardenable mixture comprising 50 - 70% by weight of cement and 30 - 60% by weight of a dispersion according to Claim 16.

18. Use of cement slurries according to Claim 17 for coating and sealing roofs, terraces and cellars, and as corrosion protection for metal surfaces or steel-reinforced concrete and for repairing weathered concrete surfaces.

**Revendications**

1. Procédé de production de copolymérisats par polymérisation radicalaire de plusieurs monomères à insaturation olifénique en émulsion aqueuse en présence d'agents émulsionnants où au moins l'un des monomères a une solubilité de >5 % en poids dans l'eau dans les conditions de la réaction, caractérisé en ce que dans une première étape on polymérise le ou les monomères solubles dans l'eau (c, d, e) en présence des agents émulsionnants jusqu'à une transformation d'au moins 15 %, avantageusement de 20-30 % et ensuite le ou les autres monomères (a, b, f) sont ajoutés au mélange réactionnel, le cas échéant par étapes, en utilisant les monomères suivants :

> a) 50-97 % en poids, en se rapportant à (a) + (b), d'au moins un monomère insoluble dans l'eau, dont l'homopolymère présente une Tg < -50°C;
> b) 3-50 % en poids, en se rapportant à (a) + (b), d'au moins un monomère insoluble dans l'eau, copolymérisable avec (a), dont l'homopolymère présente une Tg > +50°C;
> c) 0,1-1,0 % en poids, en se rapportant à (a) + (b), d'un acide carboxylique insaturé;
> d) 1,0-5 % en poids, avantageusement 1-3 % en poids, en se rapportant à (a) + (b), d'un autre monomère soluble dans l'eau copolymérisable avec (c) et (d);
> e) 0-3 % en poids avantageusement 1-3 % en poids, en se rapportant à (a) + (b), d'un autre monomère soluble dans l'eau, copolymérisable avec (c) et (d).
> f) 0-100 % en poids, préférentiellement 0-50 % en poids et en particulier 0-20 % en poids, en se rapportant à (a) + (b), d'autres comonomères insolubles dans l'eau.

**2.** Procédé selon la revendication 1, caractérisé en ce que, dans la production du polymère soluble dans l'eau, on utilise les agents émulsionnants suivants :

ester éthoxylé d'acides monocarboxyliques aliphatiques saturés ou insaturés à chaîne longue ayant 14-20, avantageusement 16-18 atomes de C et/ou les alkylphénols éthoxylés avec 8-9 atomes de C dans leur groupe alkyle, le degré d'éthoxylation dans les deux groupes de produits étant compris entre 5 et 35 moles d'unités d'oxyde d'éthylène, avantageusement entre 10 et 20 moles d'unités d'oxyde d'éthylène, et agents émulsionnants anioniques, par exemple alcools gras sulfatés ayant 8-14 avantageusement 10-12 atomes de C dans la chaîne et cela à raison de 0,1-0,5, avantageusement 0,1-0,3 %, ou bien également alcools éthoxylés ayant une longueur de chaîne de 10-15, avantageusement de 11-13 atomes de C.

**3.** Procédé selon la revendication 1 ou 2, caractérisé en ce que la concentration de l'ester éthoxylé ou éther est comprise entre 2 e 10 % en poids, avantageusement entre 6 et 8 % en poids, en calculant sur le mélange des monomères totaux et la concentration de l'agent émulsionnant anionique est comprise entre 0,1 et 0,5 % en poids, avantageusement entre 0,1 et 0,3 % en poids et la concentration de l'alcool éthoxylé est de 0,3-1,0 % en poids, avantageusement de 0,5-0,7 % en poids.

**4.** Procédé selon les revendications 1 à 3, caractérisé en ce que la température, lors de la polymérisation à la première étape, est de 40-60°C, avantageusement de 50-55°C et en ce que la température dans l'étape 2 est de 60-80°C, avantageusement de 70°C.

**5.** Procédé selon les revendications 1 à 4, caractérisé en ce que la valeur du pH de la première étape est de 5,5-6,0.

**6.** Procédé selon les revendications 1 à 5, caractérisé en ce que les monomères solubles dans l'eau sont utilisés à une concentration de 3-6 % en poids, avantageusement de 3,5-4,5 % en poids, en se rapportant à la phase aqueuse.

**7.** Procédé selon les revendications 1 à 6, caractérisé en ce que la quantité totale des agents de transfert de chaîne est utilisée à la première étape.

**8.** Procédé selon les revendications 1 à 7, caractérisé en ce que l'agent de transfert de chaîne utilisé est l'hydroquinone ou du p.tert-butylbenzène catéchol.

**9.** Procédé selon les revendications 1 à 8, caractérisé en ce que la concentration de l'agent de transfert de chaîne est au total de 0,012-0,017 % en poids, en se rapportant sur la quantité du mélange réactionnel.

**10.** Procédé selon les revendications 1 à 9, caractérisé en ce qu'on utilise 65-97 % en poids, en particulier 70-95 % en poids, en se rapportant à (a) + (b), du monomère (a).

**11.** Procédé selon l'une les revendications 1 à 10, caractérisé en ce que (a) est de l'acrylate de n-butyle, de butyle tertiaire, du méthacrylate de n-dodécyle et/ou de l'acrylate de 2-éthylhexyle.

**12.** Procédé selon les revendications 1 à 11, caractérisé en ce que (b) est du méthacrylate de diméthyle ou du méthacrylate de butyle tertiaire, du méthacrylate d'éthyle, du méthacrylate de phényle, du méthacrylate de 3,3-diméthyl-2-butyle, du méthacrylate d'isopropyle.

**13.** Procédé selon les revendications 1 à 12, caractérisé en ce que (c) est l'acide (meth) acrylique, l'acide fumarique et/ou l'acide maléique, en particulier l'acide acrylique.

**14.** Procédé selon les revendications 1 à 12, caractérisé en ce que (d) est le N-méthylolamide de l'acide (meth) acrylique, de l'acide fumarique et/ou de l'acide maléique, en particulier le N-méthylolacrylamide.

**15.** Procédé selon les revendications 1 à 14, caractérisé en ce que (e) est l'acrylamide, la N-vinylpyrrolidone et/ou un hydroxyalkyle (meth) acrylate et/ou un acide carboxylique insaturé soluble dans l'eau, avantageusement de l'acide acrylique ou de l'acide méthacrylique.

**16.** Utilisation d'une dispersion aqueuse contenant 40-70 % en poids, avantageusement 50-60 % en poids d'un copolymérisat produit selon l'une des revendications 1 à 15 en tant que liant pour la production de boues concentrées de ciment avec une proportion en matières synthétiques de 35-60 % en poids en se rapportant au ciment ou de manière préférée, la dispersion est produite par copolymérisation des monomères (a) à (e) en émulsion aqueuse en présence de

g) 2-10 % d'un ester éthoxylé des acides de monocarboxyliques aliphatiques saturés ou insaturés à chaîne longue avec 14-20, avantageusement 16-18 atomes de C et/ou d'un alkyl phénol éthoxylé avec 8-9 atomes de C dans le groupe alkyle,
h) 0,1-0,5 %, avantageusement 0,1-0,3 %, d'un alcool gras sulfaté avec 8-14, avantageusement 10-12 atomes de C dans la chaîne,
i) 0,3-1,0 %, avantageusement 0,5-0,7 % d'alcool éthoxylé avec une longueur de chaîne de 5-10, avantageusement de 6-8 atomes de C, où

les données se rapportent au pourcentage pondéral de la quantité totale des monomères et la quantité totale des monomères est avantageusement dans la zone de 35-65 % en poids en se rapportant à la somme de la quantité des monomères, de l'agent dispersant et de l'eau.

17. Mélange durcissable contenant 50-70 % en poids de ciment et 30-60 % en poids d'une dispersion selon la revendication 16.

18. Utilisation de boues de ciment selon la revendication 17 pour l'enduction et l'étanchéification de toits, terrasses, caves ainsi que la protection contre la corrosion pour des surfaces métalliques ou du béton armé d'acier et la réparation de surfaces de béton abimées par les intempéries.